# EUROPÄISCHE PATENTANMELDUNG

(11) **EP 0 552 666 A1**
(43) Veröffentlichungstag der Anmeldung: **28.07.1993**
(21) Anmeldenummer: 93100459.2
(22) Anmeldetag: 14.01.1993
(51) Int. Cl.: B29C 67/16

(54) **Verfahren zur Herstellung eines Kunststofferzeugnisses mit harter, verschleissfester Oberfläche**

(30) Priorität: 21.01.1992 US 822905
(71) Anmelder: DEERE & COMPANY, Moline, Illinois 61265 (US)
(72) Erfinder: Revankar, Gopal Subray, Moline, Illinois 61265 (US)
(74) Vertreter: Feldmann, Bernhard

(57) **Zusammenfassung**

Es wird ein Verfahren zur Herstellung eines Kunststofferzeugnisses mit harter, verschleißfester Oberfläche beschrieben und vorgeschlagen, die Oberfläche einer Tragplatte (14) gewünschter Form und Größe wenigstens bereichsweise mit einer Haft- oder Klebstoffschicht zu beschichten. Auf diese Haft- oder Klebstoffschicht wird eine Vielzahl von Teilchen (12), die ein hartes, verschleißfestes Material enthalten, aufgebracht. Nach dem Abbinden der Haft- oder Klebstoffschicht sind die Teilchen (12) auf der Tragplatte (14) verankert. Nun wird die Tragplatte (14) mit der Materialbeschichtung in den Hohlraum einer Form eingefügt, in die anschließend ein polymeres Material eingebracht wird. Die Tragplatte (14) und das polymere Material werden geeigneten Bedingungen ausgesetzt, bei denen ein polymeres Erzeugnis mit einer harten, verschleißfesten Oberflächenschicht entsteht. Die Tragplatte (14) wird nach dem Abkühlen der Form wieder aus dieser entnommen.

## Beschreibung

Die Erfindung betrifft ein Verfahren zur Herstellung eines Kunststofferzeugnisses mit harter, verschleißfester Oberfläche.

Es sind Verfahren bekannt geworden, durch die versucht wurde, die Verschleißfestigkeit von polymeren Kunststofferzeugnissen zu verbessern. Bei diesen Verfahren wird das Polymer mit harten Phasen durchmischt und das Gemisch zur Formung eines Verbundes verwendet, bei dem die harten Phasen im gesamten Volumen verteilt sind.

Es besteht jedoch weiterhin die Nachfrage nach einem Verfahren, bei dem die harten Phasen nur an solchen Stellen des Erzeugnisses liegen, die in besonderem Maße einem Verschleiß widerstehen sowie verfestigt oder versteift werden sollen. Derartige Stellen liegen insbesondere auf der Oberfläche des Erzeugnisses.

Es sind einige Verfahren bekannt, um Metalle, beispielsweise Eisen, mit harten, verschleißfesten Oberflächen, beispielsweise aus Karbiden, zu imprägnieren. So beschreibt die US-PS 4,119,459 ein Verfahren, bei dem Karbide in die Werkstückoberfläche eingeschmolzen werden, indem Karbidmakroteilchen auf ein Gießmodell aufgetragen werden und anschließend das Werkstück gegossen wird. Es sind auch Verfahren bekannt, bei denen für die Herstellung von Eisenprodukten mit harten Oberflächen beim Gießverfahren Polystyrolmodelle verwendet werden. Ein solches Verfahren wurde beispielsweise von Hansen et al, "Application of Cast-On Ferrochrome-Based Hard Surfacings to Polystyrene Pattern Castings", Bureau of Mines Report of Investigations 8942, U.S. Department of the Interior, 1985, beschrieben.

Ferner sind aus der EP-A-0 421 374 und der EP-A-0 470 503 unterschiedliche Verfahren bekannt, durch die das Imprägnieren von Metalloberflächen mit Karbiden während des Gießprozesses verbessert wird, indem Schichten aus Karbidteilchen auf einen Schaumstoffkern oder einen Sandkern übertragen werden, der dem Abgießen des herzustellenden aus Eisen oder Aluminium bestehenden Werkstückes dient.

Es wurde jedoch kein derartiges Verfahren zur Herstellung polymerer Kunststoffe beschrieben.

Die der Erfindung zugrunde liegende Aufgabe wird darin gesehen, ein Verfahren zur Herstellung eines Kunststofferzeugnisses, insbesondere aus polymerem Material mit harter, verschleißfester Oberfläche anzugeben.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Durch die Anwendung des erfindungsgemäßen Verfahrens kann ein polymeres Kunststofferzeugnis gewonnen werden, dessen Oberfläche mit hartem, verschleißfestem Material imprägniert ist. In dieser Oberflächenschicht sind Karbidteilchen entweder in einem regelmäßigen Muster oder wahllos angeordnet.

Anhand der Zeichnung werden nachfolgend Ausführungsbeispiele sowie weitere Vorteile und vorteilhafte Weiterbildungen und Ausgestaltungen der Erfindung näher beschrieben und erläutert.

Es zeigt:
- Fig. 1: Verfahrensschritte zum Auftragen einer Teilchenanordnung auf eine Tragplatte gemäß vorliegender Erfindung,
- Fig. 2: ein Klebeband mit einer dichtgepackten Anordnung von kugelförmigen Wolframkarbidteilchen und
- Fig. 3 bis 6: Abbildungen verschiedener Kunststofferzeugnisflächen, in die eine harte, verschleißfeste Schicht imprägniert ist.

Durch die erfindungsgemäßen Verfahrensschritte läßt sich eine Oberflächenschicht aus verschleißfestem Material bei irgendeinem bekannten polymeren Erzeugnis ausbilden. Als polymeres Material kommt vorzugsweise ein thermoplastischer oder wärmehärtender Kunststoff in Betracht. Bei den bevorzugten Kunststoffen handelt es sich beispielsweise um Polyäthylene, Polyurethane oder ähnliche Polymere mit hohem Molekulargewicht. Derartiges polymeres Material läßt sich in einer beliebigen bekannten Konstitution, beispielsweise als Pulver, als bei hohen Temperaturen verflüssigbares Polymer oder als aus zwei Komponenten bestehendes Klebstoffgemisch, welches reagiert und ein warmhärtendes Polymerprodukt bildet, verwenden.

Gemäß vorliegender Erfindung finden größere Teilchen aus einem harten, verschleißfesten Material Verwendung, die vorzugsweise eine kugelförmige Form aufweisen. Der Teilchendurchmesser kann 2 mm und mehr betragen. Vorzugsweise liegt der Teilchendurchmesser zwischen 2 und 3 mm und weicht in einer Charge nicht mehr als 0,5 mm von einem mittleren Durchmesser ab. Es versteht sich jedoch, daß auch Teilchen mit unterschiedlicher Größe verwendet werden können, um Schichten herzustellen, die in vorgebbarer Weise an verschiedenen Stellen des Endproduktes unterschiedliche Dicken aufweisen.

Auch wenn die bevorzugten Teilchen wegen praktischer Erwägungen im wesentlichen kugelförmig sind, spielt die Teilchenform für die vorliegende Erfindung keine wesentliche Rolle. So kann beispielsweise auch Pulver aus feinem kantigen Hartphasenmaterial verwendet werden, um eine abriebsfeste Oberfläche herzustellen.

Als verschleißfestes Material läßt sich jedes Material verwenden, das eine harte Phase aufweist. Derartige Materialien sind im Stand der Technik beschrieben. Es handelt sich beispielsweise um Wolframkarbid, Chromkarbid und ähnliches oder Gemische hieraus. Ferner kann dieses Material metallische Binder enthalten. Für eine chemische Metallbindung eignen sich beispielsweise Metall aus der Eisengruppe, und zwar vorzugsweise Kobalt für die Anwendung bei Wolframkarbid oder Nickel für die Anwendung bei Chromkarbid und dergleichen. Die metallischen Binder können zur Erzeugung der bevorzugten sphärischen Form zweckmäßig sein.

Gemäß dem erfindungsgemäßen Verfahren werden die Teilchen auf einer Tragplatte angeheftet. Bei der Tragplatte handelt es sich um eine Tragschicht, die beispielsweise eine Dicke von 1,5 bis 3,0 mm (errechnet aus 1/16 - 1/8 inch) aufweist. Die Teilchen können durch einen Klebstoff, vorzugsweise einen anorganischen Hochtemperaturklebstoff, auf der Tragplatte angeheftet werden. Hierdurch werden die Karbide davor geschützt, daß sie sich vorzeitig von der Tragplatte lösen.

Der Hochtemperaturklebstoff weist einen Schmelzpunkt auf, der höher liegt als die Glastemperatur des Polymers, das ist die Temperatur, bei der das Polymer beim Erhitzen erweicht und beim Abkühlen erhärtet. Grundsätzlich kann jeder entsprechende Klebstoff verwendet werden, bevorzugt wird jedoch ein Klebstoff, der Ceramabond 569 oder einen ähnlichen Stoff enthält. Bei Ceramabond 569 handelt es sich um ein Erzeugnis von AREMCO, USA. Beispiele anderer verwendbarer Klebstoffe enthalten AREMCO 516, Polyvinylalkohol etc.

Auf die vorzugsweise als Stahlplatte ausgebildete Tragplatte wird an den entsprechenden Stellen, an denen verschleißfeste Schichten entstehen sollen, eine Klebstoffschicht aufgetragen. Die Klebstoffschicht kann durch jedes geeignete Mittel, beispielsweise durch Streichen oder Sprühen, auf die Stahlplatte aufgetragen werden. Die Klebstoffschicht hat zweckmäßigerweise eine Dicke von mindestens 0,1 mm, vorzugsweise von ungefähr 0,1 mm bis ungefähr 0,5 mm und besonders vorzugsweise von 0,2 mm bis 0,5 mm.

Die Teilchen aus dem harten verschleißfesten Material können entweder wahllos auf die Klebstoffschicht verteilt werden, so daß beispielsweise bei Verwendung von feinen kantigen Teilchen diese unregelmäßig und willkürlich auf der Oberfläche verteilt sind, oder sie können in regelmäßigen Mustern auf der Klebstoffschicht angeordnet werden, wie es bei der Verwendung von größeren sphärischen Teilchen zweckmäßig ist.

Um eine regelmäßige Verteilung von sphärischen Teilchen 12, 16 zu gewinnen, kann eine Rasterplatte 10, beispielsweise ein Blech mit einer gewünschten Lochverteilung, verwendet werden. Vorzugsweise hat die Rasterplatte 10 eine hexagonale Lochverteilung, wodurch sich eine optimale Packungsdichte für die Teilchen 12, 16 ergibt. Die Dicke der Rasterplatte 10 ist vorzugsweise geringer als der mittlere Teilchendurchmesser und liegt zweckmäßigerweise zwischen ungefähr 1/2 und ungefähr 3/4 des mittleren Teilchendurchmessers, so daß die Teilchen 12, 16 etwas über die Rasterplatte 10 herausragen, wenn letztere auf einer Unterlage aufliegt. Insbesondere kann die Rasterplatte 10 aus einem Stahl- oder Kunststoffblech (z. B. Polykarbonat) erforderlicher Dicke bestehen, in das Löcher gebohrt sind.

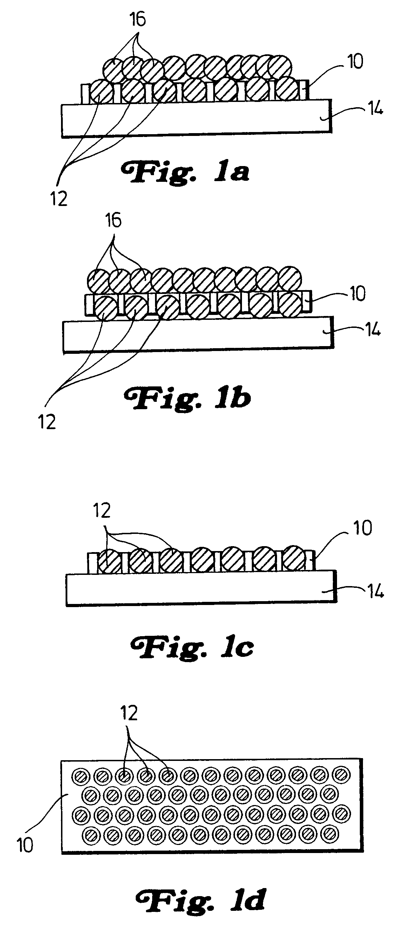

Nachdem die Rasterplatte 10 auf eine ebene Unterlage 14, die beispielsweise aus Stahl oder dergleichen besteht, aufgelegt ist, werden die Teilchen 12, 16 über die Rasterplatte 10 ausgebreitet (Fig. 1a). Überschüssige Teilchen 16 werden wieder entfernt. Dieses Entfernen kann auf eine beliebige geeignete Weise erfolgen. Beispielsweise wird die Rasterplatte 10 um einen Betrag von der Unterlage abgehoben, der ungefähr dem Teilchenradius entspricht (Fig. 1b). Die überschüssigen Teilchen 16 können dann einfach von der Rasterplatte 10 abgestrichen werden. Hierauf kann die Rasterplatte 10 wieder abgesenkt werden (Fig. 1c), so daß die oberen Bereiche der Teilchen 12 über die obere Fläche der Rasterplatte 10 hinausragen und ein geometrisches Verteilungsmuster bilden (Fig. 1d).

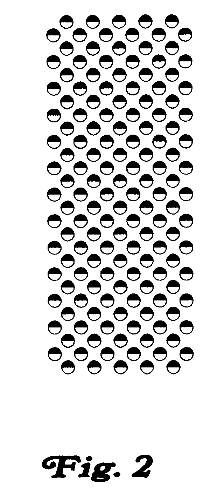

Dann können die in dem beschriebenen Verteilungsmuster angeordneten Teilchen 12 auf verschiede Weisen auf die Stahlplatte übertragen werden. Hierfür kann gemäß einer bevorzugten Ausgestaltung der Erfindung ein Haft- oder Klebeband auf das Verteilungsmuster der Teilchen 12 aufgelegt werden. Wenn das Klebeband abgehoben wird, kleben an ihm die Teilchen 12 und können von der Rasterplatte 10 abgehoben werden. Die Teilchen 12 bilden auch auf dem Klebeband das oben beschriebene geometrische Verteilungsmuster. Fig. 2 stellt beispielsweise ein Klebeband dar, auf dem in einer dichten einlagigen Packung Wolframkarbidteilchen verteilt sind.

Als Klebeband kommt jedes Band in Frage, dessen Klebewirkung einerseits hoch genug ist, um schwere, dicht gepackte Karbidteilchen in einer definierten Lage zu halten und andererseits gering genug ist, um die Teilchen freizugeben, wenn das Klebeband von dem Karbidteilchenmuster abgezogen wird, nachdem ein weiter unten beschriebenes Klebemittel abgebunden hat. Beispielsweise eignen sich Klebebänder vom Typ 3M 404 mit einem Klebstoff hohen Haftvermögens und vom Typ 3M 9415 oder Y928 mit Akrylklebstoff geringeren Haftvermögens.

Das Klebeband wird dann auf die Klebstoffschicht der Tragplatte derart aufgelegt, daß die Karbidteilchen lediglich einen minimalen Kontakt mit der Klebstoffschicht bilden. Bis die Klebstoffschicht getrocknet bzw. abgebunden ist, kann das Klebeband auf der Klebstoffschicht bewegt werden, ohne daß das Verteilungsmuster der Teilchen gestört wird oder der Kontaktbereich zwischen Klebstoff und den Teilchen verändert wird. Diese Unabhängigkeit erlaubt eine genaue Lageausrichtung des Klebebandes auf der Tragplatte. Nun kann heiße Luft während einer ausreichenden Zeitdauer, beispielsweise 35 Sekunden, auf das Klebeband geblasen werden, um die Klebstoffschicht ausreichend zu trocknen und die Teilchen sowie das Klebeband räumlich zu fixieren, so daß die Tragplatte gehandhabt werden kann, ohne das Verteilungsmuster der Teilchen zu stören.

Nachdem die Teilchen auf die Klebstoffschicht aufgebracht sind, bindet diese ab. Bei Verwendung von AREMCO's Ceramabond 569 als Klebstoff erfolgt das Abbinden bei Raumtemperatur innerhalb von 8 bis 12 Stunden. Nach dem Abbinden des Klebstoffes kann das Klebeband entfernt werden. Hierbei verbleibt ein Muster der Karbidteilchen fest verankert auf der Tragplatte.

Bei der beschriebenen Anordnung besteht lediglich ein minimaler Kontakt zwischen den Teilchen und der als Metallblech ausgebildeten Tragplatte. Insbesondere besteht während der Bindung an der Tragplatte zwischen den Teilchen und der Klebstoffschicht im wesentlichen lediglich ein Einpunktkontakt. Die Teilchen sind nun gleichmäßig auf der Tragplatte verteilt, ohne daß sich benachbarte Teilchen gegenseitig berühren. Dies ermöglicht es, daß sich die Polymere (beispielsweise ein Polymerpulver) leicht rund um jedes Teilchen verteilen kann und sich eine gute Bindungsqualität ergibt.

Gemäß dem folgenden Verfahrensschritt wird die Tragplatte mit den darauf angehefteten Teilchen in den Hohlraum einer Form oder dergleichen eingebracht, um das eigentliche Polymererzeugnis beispielsweise durch Spritzgießen herzustellen.

Die Tragplatte kann beispielsweise so in ein Formwerkzeug eingelegt werden, daß die Teilchen dem durch das Polymer auszufüllenden Innenraum der Form zugewandt sind. Ein geeignetes Polymerpulver, z. B. aus Polyäthylen oder Polyurethan mit ultrahohem Molekulargewicht wird dann in das Formwerkzeug eingebracht, das Formwerkzeug wird auf eine geeignete Temperatur aufgeheizt, bei der die Polymere ihre Glastemperatur erreichen, und dann wird ein Druck aufgebracht, durch den die Polymere durch die Anordnung der Karbidteilchen gedrückt werden, so daß die Teilchen umschlossen werden. Typische Verfahrensparameter, um ein mit Karbiden imprägniertes Blech aus Polyäthylen mit einem Molekulargewicht von 4 bis 5 Millionen herzustellen sind:
- Druck:: 6,9 MPa (umgerechnet aus 1000 psi)
- Temperatur:: 196°C (umgerechnet aus 385 °F)
- Aufwärmzeit der Gießform:: 45 Minuten
- Abkühlzeit der Gießform:: 30 Minuten

Gemäß einer anderen Ausführungsart der Erfindung wird fließfähiges Polymer, beispielsweise Polyurethan, das über seine Glastemperatur erwärmt wurde, in eine Gießform abgegossen, wo es abkühlt. Ferner kann gemäß einer weiteren Ausgestaltung der Erfindung eine Klebstoffmischung in die Gießform eingebracht werden, in der diese reagiert und ein festes wärmehärtendes Polymererzeugnis, beispielsweise aus Epoxidharz bildet.

Eines der erfindungsgemäßen Verfahren kann zur Herstellung von polymeren Erzeugnissen verwendet werden, für die es eine Vielzahl von Anwendungen gibt. Ferner eignen sich diese Verfahren zur Herstellung verschleißfester Oberflächen an ausgewählten, beanspruchten Stellen der Erzeugnisoberfläche.

An den verschleißfesten Oberflächen weisen die Polymere wegen der Einlagerung der verschleißfesten Teilchen eine erhöhte Abriebsfestigkeit auf. Ferner ist hier der Oberflächenreibungskoeffizient erhöht. Diese Eigenschaften vergrößern den Anwendungsbereich der Polymere erheblich.

Die einfache Herstellbarkeit bietet eine große Flexibilität. So können beispielsweise verschleißfeste Schichten erforderlicher Dicke ohne Schwierigkeiten hergestellt werden, indem einfach der Teilchendurchmesser entsprechend ausgewählt wird.

Die Verwendung von Klebebändern erlaubt es, daß eine regelmäßige Teilchenverteilung auf eine gekrümmte oder eine komplexe Oberfläche eines Formwerkzeugs für ein polymeres Erzeugnis aufgebracht werden kann. Ferner läßt sich diese regelmäßige Teilchenverteilung mit gleichförmiger Dicke der Hartphasenschicht über einen ganzen Bereich der Verbundoberfläche bei gleichmäßigen tribologischen und anderen der oben erwähnten Eigenschaften herstellen.

Zur näheren Beschreibung der vorliegenden Erfindung wird im folgenden ein Ausführungsbeispiel mit weiteren Vorteilen angegeben.

### Beispiel:

Ein verschleißfestes Pulver aus kugelförmigen Teilchen 12, 16 mit einem mittleren Teilchendurchmesser von 2 bis 3 mm, deren Durchmesser nicht mehr als um 0,5 mm von einem mittleren Teilchendurchmesser abweichen, wird über eine Rasterplatte 10 gestreut, die ein hexagonales Lochmuster aufweist und auf einer ebenen Platte 14 aufliegt. Die Dicke der Rasterplatte 10 liegt zwischen 1/2 und 3/4 des mittleren Teilchendurchmessers (Fig. 1b).

Die Rasterplatte 10 wird über die Platte 14 um eine Höhe angehoben, die ungefähr dem Teilchenradius entspricht (Fig. 1c). Überschüssige Teilchen 16 werden von der Rasterplatte 10 heruntergewischt. Hierauf wird die Rasterplatte 10 wieder auf die Platte 14 abgesenkt, so daß die oberen Bereiche der Teilchen 12 über die Rasterplatte 10 herausragen.

Ein Klebeband wird auf die Teilchenschicht aufgelegt und leicht angedrückt. Hierauf wird das Klebeband mit den daran klebenden Teilchen angehoben, wobei das Rastermuster der Teilchen erhalten bleibt (Fig. 2).

Auf ein 1,5 bis 2,0 mm dickes Stahlblech, das als Tragplatte dient, wird eine ungefähr 0,1 bis 0,25 mm dicke Klebstoffschicht aufgetragen, die AREMCO's Ceramabond 569 enthält. Dann wird das Klebeband mit seiner Seite, auf der sich die Teilchen befinden, auf die Klebstoffschicht aufgelegt, so daß nahezu Punktkontakte zwischen den Teilchen und dem Haftmittel entstehen. Der Klebstoff wird bei 50°C über einen Zeitraum von 8 Stunden abgebunden, und das Klebeband wird nach dem Abkühlen abgezogen.

Das Stahlblech mit den darauf angeordneten Karbidteilchen wird so in eine Gußform eingebracht, daß die Teilchen nach oben bzw. in das Innere der Gießform weisen. Polymerpulver, das Polyäthylene mit einem ultrahohen Molekulargewicht enthält, wird in die Gußform geschüttet. Die Gußform wird auf eine Temperatur von 196°C erwärmt, so daß die Polymere ihre Glastemperatur erreichen. Es wird ein Druck von 6,9 MPa angelegt, um die Polymere durch die Teilchenanordnung zu quetschen und die Teilchen zu umschließen. Hierdurch wird ein imprägniertes Teil aus Polyäthylen mit einem ultrahohen Molekulargewicht (UHMWPE) hergestellt.

Die Gußform wird dann 30 Minuten abgekühlt, woraufhin das Enderzeugnis aus der Gußform entnommen und erforderlichenfalls geschliffen und poliert werden kann.

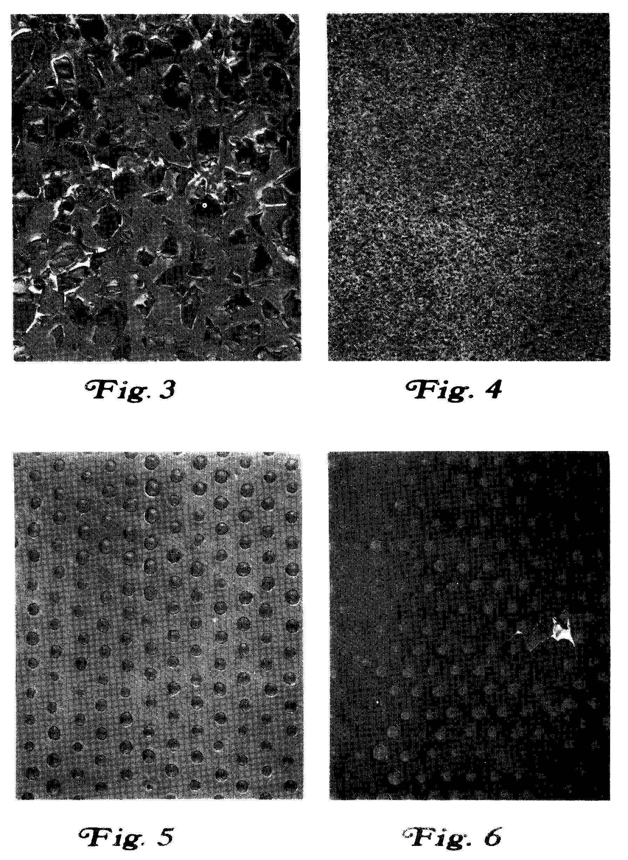

Oberflächen von Endprodukten, die nach dem erfindungsgemäßen Verfahren hergestellt sind, sind in den Figuren 3 bis 6 dargestellt.

## Patentansprüche

1. Verfahren zur Herstellung imprägnierter Kunststofferzeugnisse mit einer harten, verschleißfesten Oberflächenschicht mit folgenden Verfahrensschritten:
- Bereitstellung einer Tragplatte gewünschter Form und Größe, deren Oberfläche wenigstens bereichsweise mit einer Haft- oder Klebstoffschicht beschichtet ist,
- Aufbringen einer Vielzahl von Teilchen, die ein hartes, verschleißfestes Material enthalten auf die Haft- oder Klebstoffschicht,
- Abbinden der Haft- oder Klebstoffschicht, so daß die Teilchen auf der Tragplatte verankert sind,
- Einbringen der Tragplatte in den Hohlraum einer Form,
- Einfüllen eines polymeren Materials in den Hohlraum der Form in bekannter Weise, wobei ein polymeres Erzeugnis mit einer harten, verschleißfesten Oberflächenschicht entsteht, und
- Entnahme der Tragplatte nach Abkühlen der Form.

2. Verfahren nach Anspruch 1, dadurch gekennzeichnet, daß das polymere Erzeugnis durch Schleifen und/oder Polieren nachbearbeitet wird.

3. Verfahren nach Anspruch 1 oder 2, dadurch gekennzeichnet, daß eine Rasterplatte (10) vorgesehen ist, die eine gewünschte Anordnung von Löchern zur Aufnahme von Teilchen vorherbestimmbarer Größe enthält, daß Teilchen (12, 16) aus hartem, verschleißfestem Material derart auf der Rasterplatte (10) ausgebreitet werden, daß in im wesentlichen jedes Loch der Rasterplatte (10) ein Teilchen (12) gelangt, und daß die Teilchenanordnung auf die Haft- oder Klebeschicht derart überführt wird, daß der Kontakt zwischen Teilchen (12) und Haft- oder Klebemittel möglichst gering ist.

4. Verfahren nach Anspruch 3, dadurch gekennzeichnet, daß nach dem Ausbreiten der Teilchen (12) über die Rasterplatte (10) auf diese ein Klebeband aufgelegt wird, an dem die Teilchen (12) haften, daß anschließend das Teilchenmuster mittels des Klebebandes auf die Haft-oder Klebeschicht des Sandkerns übertragen wird und daß nach dem Abbinden des Haft- oder Klebemittels das Klebeband entfernt wird.

5. Verfahren nach Anspruch 3 oder 4, dadurch gekennzeichnet, daß die Dicke der Rasterplatte (10) etwa 1/2 bis etwa 3/4 des mittleren Teilchendurchmessers beträgt.

6. Verfahren nach einem der Ansprüche 1 bis 5, dadurch gekennzeichnet, daß die Tragplatte aus einem Stahlblech besteht, daß der Hohlraum der Form durch eine Spritzgußform gebildet wird, daß das polymere Material ein polymeres Pulver aus Polyäthylene oder Polyurethane mit einem ultrahohen Molekulargewicht ist, welches in die Spritzgußform eingebracht wird, und daß zur Bildung eines polymeren Erzeugnisses die Form und die Tragplatte nach dem Einfüllen des polymeren Pulvers auf Temperaturen um 200°C gebracht und der Hohlraum mit einem Druck von ca. 7 MPa beaufschlagt wird.

7. Verfahren nach einem der Ansprüche 1 bis 5, dadurch gekennzeichnet, daß die Tragplatte aus einem Stahlblech besteht und das polymere Material ein durch Wärmeanwendung verflüssigbares Polymer ist, welches in den Hohlraum der Form abgegossen wird, und daß nach dem Abgießen eine geeignete Zeitspanne zum Abkühlen und Verfestigen des verflüssigten Polymers vorgesehen ist.

8. Verfahren nach einem der Ansprüche 1 bis 5, dadurch gekennzeichnet, daß die Tragplatte aus einem Stahlblech besteht und das polymere Material ein Komponentenkleber ist, der nach dem Vermischen seiner Komponenten in den Hohlraum der Form eingebracht wird und zu einem hochvernetztes Epoxidharz reagiert.

9. Verfahren nach einem der Ansprüche 1 bis 8, dadurch gekennzeichnet, daß die verschleißfesten Teilchen im wesentlichen kugelförmig sind und wenigstens einen mittleren Durchmesser von 2 mm, vorzugsweise von 2 bis 3 mm aufweisen, wobei die Durchmesser der einzelnen Teilchen maximal um 0,5 mm von dem mittleren Durchmesser abweichen.

10. Verfahren nach einem der Ansprüche 1 bis 9, dadurch gekennzeichnet, daß das verschleißfeste Material Wolframkarbid, Chromkarbid, Tonerdekeramik oder eine Mischung daraus enthält.

11. Verfahren nach einem der Ansprüche 1 bis 10, dadurch gekennzeichnet, daß die Haft- oder Klebstoffschicht einen anorganischen Hochtemperaturklebstoff enthält.
